(19)

Europäisches
Patentamt
European
Patent Office
Office européen
des brevets

(11) **EP 2 903 185 B1**

(12) **EUROPEAN PATENT SPECIFICATION**

(45) Date of publication and mention
of the grant of the patent:
**21.12.2016 Bulletin 2016/51**

(51) Int Cl.:
*H04J 14/04* (2006.01)          *H04B 10/294* (2013.01)
*H04B 10/25* (2013.01)

(21) Application number: **14305147.2**

(22) Date of filing: **03.02.2014**

(54) **Optical amplification node for a Spatial Division Multiplexing optical network**

Optischer Verstärkungsknoten für ein optisches Raummultiplexnetzwerk

Noeud d'amplification optique pour un réseau optique à multiplexage par répartition spatiale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2015 Bulletin 2015/32**

(73) Proprietor: **ALCATEL LUCENT
92100 Boulogne-Billancourt (FR)**

(72) Inventors:
 • **Brindel, Patrick
   91620 Nozay (FR)**
 • **Salsi, Massimiliano
   91620 Nozay (FR)**

(74) Representative: **Berthier, Karine
Alcatel-Lucent International
148/152, route de la Reine
92100 Boulogne-Billancourt (FR)**

(56) References cited:
    **EP-A2- 2 365 654      US-A1- 2012 207 470**

• OZDUR I ET AL: "Think Outside the Fiber: Imaging Amplifier for Space-Multiplexed Optical Transmission", IEEE PHOTONICS JOURNAL, IEEE, USA, vol. 4, no. 5, 1 October 2012 (2012-10-01) , pages 1316-1324, XP011488192, ISSN: 1943-0655, DOI: 10.1109/JPHOT.2012.2208184
• DAVID RICHARDSON: "Fiber amplifiers for SDM systems", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 March 2013 (2013-03-17), pages 1-64, XP032427228, ISBN: 978-1-4799-0457-0
• XIANG LIU ET AL: "Performance improvement of space-division multiplexed 128-Gb/s PDM-QPSK signals by constructive superposition in a single-input-multiple-output configuration", OPTICAL FIBER COMMUNICATION CONFERENCE AND EXPOSITION (OFC/NFOEC), 2012 AND THE NATIONAL FIBER OPTIC ENGINEERS CONFERENCE, IEEE, 4 March 2012 (2012-03-04), pages 1-3, XP032174844, ISBN: 978-1-4673-0262-3

## Description

### Field of the invention

The invention relates to the technical field of optical communication systems employing Spatial Division Multiplexing.

### Background

Long distance data transmission employs amplification devices placed periodically on the line in order to compensate the optical fibre attenuation (0.18dB/km). The amplifier scheme is mainly based on Erbium Doped Fibre Amplifier (EDFA) which allows several wavelengths carrying binary data to be amplified simultaneously (WDM property) in a bandwidth of wavelength (i.e. C-band or/and L-band usually).

In order to increase the capacity of transmission systems, the scientific community is working now on the possibility to transmit several WDM signals spatially multiplexed on the fiber, each WDM signal carrying different data. Optical networks employing Spatial Division Multiplexing (SDM) provide flexibility, high capacity and efficient use of a single optical fiber. Recent experiments demonstrated that it is possible to have amplification for WDM and SDM with an EDFA. However the performances of amplifiers are limited in terms of gain and noise and also in terms of functionality and footprint.

Document US2012/207470 presents prior art relevant to the disclosure. It discloses a plurality of pump lasers adapted to provide different gains in different modes of the attached multimode Erbium doped fiber.

### Summary

In an embodiment, the invention provides an optical amplification device for a Spatial Division Multiplexing optical fiber, comprising:

- an input section connectable to a first optical fiber for receiving a plurality of spatially multiplexed optical signals from the first optical fiber,
- a coarse amplification section connected to the input section, the coarse amplification section comprising an Erbium doped optical waveguide arranged for amplifying all optical signals of the plurality of spatially multiplexed optical signals received in the input section,
- a spatial demultiplexing section connected to an output of the coarse amplification section for receiving the plurality of spatially multiplexed optical signals amplified, said spatial demultiplexing section being arranged for separating the plurality of spatially multiplexed optical signals as a function of a spatial property of each optical signal,
- a spatial multiplexing section having a plurality of inputs and an output, the output of the spatial multiplexing section being connectable to a second optical fiber for transmitting a plurality of spatially multiplexed optical signals in the second optical fiber, said spatial multiplexing section being adapted for spatially multiplexing into the second optical fiber a plurality of optical signals received at the inputs of the spatial multiplexing section,
- a plurality of optical fine adjustment paths each arranged between an output of the spatial demultiplexing section and an input of the spatial multiplexing section and adapted to send a respective optical signal from the output of the spatial demultiplexing section to the input of the spatial multiplexing section, wherein each optical fine adjustment path comprises an independent optical power adjustment component adapted to adjust power of the optical signal carried on the corresponding optical fine adjustment path.

In embodiments, such an optical amplification device may further comprise one or more of the following features.

In an embodiment, the first and second fibers are multi-mode optical fibers, each signal of the plurality of spatially multiplexed optical signals being carried on a respective propagation mode of the first optical fiber, the Erbium doped optical waveguide being a multi-mode waveguide, the spatial demultiplexing section being a mode demultiplexer arranged for separating the plurality of mode-multiplexed optical signals as a function of the propagation mode of the optical signals in the first optical fiber and the multiplexing section being a mode multiplexer adapted for mode multiplexing into the second optical fiber the optical signals received at the inputs of the mode multiplexer.

In an embodiment, each output of the spatial demultiplexing section is associated to a respective mode of the first optical fiber, each input of the spatial multiplexing section is associated to a respective mode of the second optical fiber, and wherein the plurality of fine adjustment paths are all arranged to connect an output of the demultiplexing section to a shifted input of the multiplexing section so that each optical signal of the plurality of optical signals is carried in the second optical fiber on a propagation mode having different spatial properties from the associated propagation mode in the first optical fiber.

In an embodiment, the first fiber and the second optical fiber are multi-core optical fibers, each optical signal of the plurality of spatially multiplexed optical signals being carried on a respective core of the first multi-core optical fiber, the Erbium doped optical waveguide being a multi-core waveguide, the spatial demultiplexing section being a core demultiplexer arranged for separating the plurality of spatially multiplexed optical signals as a function of the core of the Erbium doped optical waveguide on which each signal is carried, and the multiplexing section being a spatial multiplexer adapted for sending all the optical signals received at the inputs of the mode multiplexer into respective cores the second multi-core optical fiber.

In an embodiment, each output of the spatial demultiplexing section is associated to a respective core of the first optical fiber, each input of the spatial multiplexing section is associated to a respective core of the second optical fiber, and wherein the plurality of fine adjustment paths are all arranged to connect an output of the demultiplexing section to a shifted input of the multiplexing section so that each optical signal of the plurality of signals is carried in the second optical fiber on a core having different spatial properties from the associated core in the first optical fiber.

In an embodiment, an optical signal of the plurality of spatially multiplexed optical signals is a WDM optical signal.

In an embodiment, the coarse amplification section further com prises :

- a first optical isolator connected to the input section for passing the plurality of spatially multiplexed optical signals to the Erbium doped optical waveguide,
- a pump laser,
- a dichroic mirror connected to the first isolator and to the pump laser, said dichroic mirror being adapted to couple a pump signal generated by the pump laser with the spatially multiplexed optical signal from the first isolator,
- the erbium doped waveguide connected to the dichroic mirror to receive the coupled signals, and
- a second isolator connected to the erbium doped waveguide for passing the spatially multiplexed signals to the spatial demultiplexing section.

In an embodiment, the power adjusting component comprises an optical amplifier selected in the group consisting of a semi-conductor optical amplifier, an Erbium doped fiber trunk and an Erbium doped silicon photonics waveguide.

In an embodiment, the power adjustment component comprises a Variable Optical attenuator.

In an embodiment, the optical amplifier operates at a fixed bias and the Variable optical attenuator is controlled dynamically.

In an embodiment, the optical amplification device further comprises:

- a controller,
- a global power monitor connected to the output of the spatial multiplexing section for measuring a total output power of the optical amplification device, the global monitor being connected to the controller to send measured total output power to the controller,

and wherein each optical adjustment path further comprises a local power monitor for measuring the power of the spatial signal on the corresponding optical adjustment path, each local power monitor being connected to the controller, the controller being adapted to configure each optical adjustment component as a function of the total output power measurement and the local power measurement of the corresponding optical adjustment path.

In an embodiment, the invention also provides a method for operating an optical amplification as described above, the method com prising :

- receiving a plurality of spatially multiplexed optical signals in the input section,
- amplifying all the signals of the plurality of spatially multiplexed optical signals in the coarse amplification section,
- spatially demultiplexing the spatially multiplexed optical signals in the spatial demultiplexing section and sending each optical signal on a corresponding optical fine adjustment path,
- spatially multiplexing the signals carried by the plurality of optical fine adjustment paths in the spatial multiplexing sections and sending the plurality of spatially multiplexed optical signals on an optical fiber,

the method further comprising :

- measuring a total output power at the output of the spatial multiplexing section,
- calculating an average optical power of the optical adjustment paths
- measuring a local output power of an optical adjustment path comprising a power adjustment component,
- tuning the power adjustment component as a function of the difference between the average optical power of the optical adjustment paths and the measured local output power of the optical adjustment path.

Aspects of the invention are based on the idea of providing architecture for amplifying WDM signals in long distance transmission in SDM networks. Aspects of the invention are based on the idea of compensating the unequal gain among the different signals. Aspects of the invention are based on the idea of individually controlling each signal for distributed equalization. Aspects of the invention are based on the idea of amplifying all the signals simultaneously and to have an equalization with an adjustable complementary gain to manage a flat gain versus the different signals.

An idea of the invention is to have a fine gain equalization property without compromising the overall noise of the chain. An idea of the invention is to divide the noise contribution in the fine amplification path by the gain of the coarse amplification section to maintain the total noise factor close to a standard EDFA.

An idea of the invention is to compensate the losses in the spatial multiplexer and spatial multiplexer. An idea of the invention is to propagate each signal in the worst condition from one span to another one to better compensate the differential losses.

**Brief description of the drawings**

These and other aspects of the invention will be apparent from and elucidated with reference to the embodiments described hereinafter, by way of example, with reference to the drawings.

Figure 1 is a functional representation of an optical amplification device in a first embodiment having a coarse amplification section and a fine amplification section;
Figure 2 is a functional representation of the coarse amplification section of figure 1;
Figure 3 is a functional representation of a second embodiment of an optical amplification device having a permutation scheme of the fine amplification components;
Figure 4 is a functional representation of a third embodiment of an optical amplification device with a feedback control system of the fine amplification components.

**Detailed description of the embodiments**

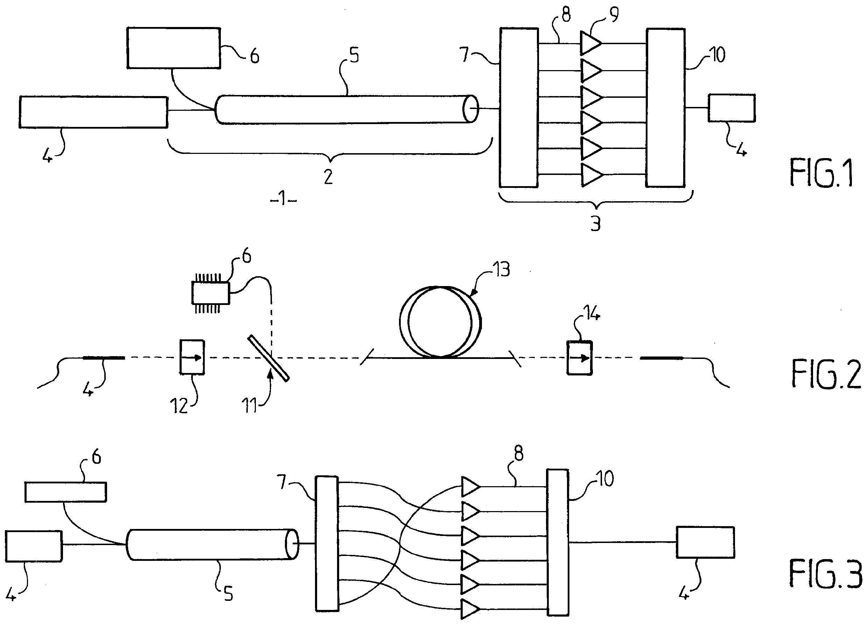

Figure 1 is a functional representation of an optical amplification device 1 having a coarse amplification section 2 and a fine amplification section 3.

The amplification optical device 1 is inserted between two multi-mode fibers 4 to compensate the optical fiber attenuation. The optical amplification device 1 has an input connected to a first multi-mode fiber 4 and an output connected to a second multi-mode optical fiber 4. Each multi-mode optical fiber 4 carries a plurality of mode-multiplexed optical signals, i.e. each signal is carried by a respective mode of the multi-mode optical fiber 4. Advantageously, each is a WDM signal (Wavelength Division Multiplexed signal).

The coarse amplification section 2 receives the plurality of mode-multiplexed optical signals from the first multi-mode optical fiber 4. The coarse amplification section is based on an EDF 5 associated with a pump laser 6. An embodiment of the coarse amplification section 2 will be described hereafter in view of figure 2.

The coarse amplification section 2 is a multi-mode section and receives the plurality of optical signals multiplexed in mode. The coarse amplification section 2 amplifies simultaneously all the optical signals received from the first optical fiber 2. The output of the coarse amplification section 2 provides a plurality of amplified mode-multiplexed signals corresponding to the plurality of mode multiplexed optical signals carried on the first multi-mode optical fiber.

The signals at the output of the coarse amplification section 2 have the same mode properties than in the first multi-mode optical fiber. However, each signal may be amplified in a different gain in the coarse amplification section 2. The amplification gain of a signal in the coarse amplification section 2 may vary as a function of the corresponding mode propagation of the signal in the first multi-mode optical fiber 4. Even when adjusting the Erbium doping profile or the spatial distribution of the pump laser 6, it may not be possible to achieve satisfying gain equalization between the modes. The smallest gap between the different gains being around 3 dB, it is not compatible with long distance transmissions.

To compensate the unequal gain among the different modes in the coarse amplification section 2, the output of the coarse amplification section 2 is connected to the fine amplification section 3. The fine amplification section 3 comprises a mode-demultiplexer (Modes-DMUX) 7 followed by, in parallel, a plurality of waveguide 8, each one comprising a fine amplification component 9, and a final modes-multiplexer (Modes-MUX) 10. The amplification component 9 may be, for instance, a semiconductor optical amplifier (SOA), an Erbium doped fiber trunk, an Erbium doped silicon photonics optical guide or any other adapted component. Advantageously, the Modes-DMUX 7, the waveguides 8, fine amplification components 9 and the Modes-MUX are integrated in the same device, for instance using photonics integration.

The Modes-DMUX 7 separates the plurality of mode-multiplexed optical signals received from the coarse amplification section 2. The Modes-DMUX 7 sends each signal on a separate waveguide 8 as a function of a respective propagation mode in the coarse amplification section 2.

Each waveguide 8 connects an output of the Modes-DMUX 7 to an input of the Modes-MUX 10. The waveguides 8 are adapted to carry an optical signal from the Modes-DMUX 7 to the Modes-MUX 10.

Each fine amplification component 9 is able to independently adjust the gain on the corresponding waveguide 8. By amplifying each signal independently, the fine amplification section 3 is able to equalize the power of the different signals passed through the coarse amplification section 2. The power equalization may be done either in a fixed way or dynamically. Advantageously, the noise contribution of this fine amplification section 3 is divided by the gain of the coarse amplification section 2, so the total noise factor remains close to a standard EDFA. All amplified signals carried by the waveguides 8 and passed through the fine amplification components 9 are recombined by the Modes-MUX 10. The Modes-MUX then sends the plurality of signals in the second multi-mode optical fiber 4.

Both coarse amplification section 2 and fine amplification section 3 may have WDM properties. Both coarse amplification section and fine amplification section may be used on the C-band and/or L-band for WDM transmission. All WDM signals are mode-multiplexed in the coarse amplification section, and all WDM signals enter in a different waveguide 8 in the fine amplification section according to their respective propagation modes in the coarse amplification section 2.

The coarse amplification section 2 provides good noise properties, similar to the one of a traditional EDFA, because there is neither Modes-MUX nor Modes-DMUX component responsible for extra losses between the transmission multi-mode fiber 4 and the erbium doped fiber 5. The fine amplification section 3 provides fine gain equalization without compromising the overall noise of the chain, which is mainly given by the noise figure of the coarse amplification section 2.

Figure 2 is a functional representation of the coarse amplification section of figure 1.

The input signal of the coarse amplification section 2, i.e. the plurality of mode multiplexed signals received from the first multi-mode optical fiber 4, is coupled with the signal of the pump laser 6. The pump laser may be at 980 nm or 1480 nm. To couple the signal of the pump laser 6 and the input signal in the coarse amplification section 2, the coarse amplification section 2 includes a dichroic mirror 11. A first isolator 12 is disposed between the dichroic mirror 11 and the first multi-mode optical fiber 4 to avoid any perturbation of the input signal from the dichroic mirror 11. The coupled signals enter in an erbium doped fiber (EDF) 13. The EDF 13 amplifies simultaneously all the signals received from the first multi-mode optical fiber 4. The amplified signals pass through a second isolator 14 from the output of the EDF 13 to the Modes-DMUX 7.

Figure 3 is a functional representation of a second embodiment of an optical amplification device having a permutation system of the fine amplification components.

In a long distance network which includes a plurality of amplification devices 1, each signal is carried on the same propagation mode from one amplification device to another. Consequently, in all consecutive amplification devices 1, one signal may happen to be always amplified with the worst amplification conditions while another one is always amplified with the best amplification conditions.

To avoid this, the embodiment illustrated in figure 3 uses the Mode-DMUX 7 and the Mode-MUX 10 in the fine amplification section 3 for mode permutations. Typically, the propagation modes of the plurality of signals in the first multi-mode optical fiber 4 are shifted in the second multi-mode optical fiber 4. Thus, the mode which has been propagating in the worst conditions in the coarse amplification section 2 is sent in the propagation mode corresponding to the best condition in the second multi-mode optical fiber 4.

In the fine amplification section 3, the waveguide 8 receiving from the Modes-DMUX 7 the signal which has experienced the worst amplification conditions through the coarse amplification section 2 is connected with the input of the Modes-MUX 10 corresponding to the propagation mode of the second optical fiber which will experience the best amplification conditions through the coarse amplification section 2 in the next span. All the other signals are shifted by one position, i.e. one mode, in direction of the worst amplification conditions (i.e. the signal corresponding to the propagation mode offering the second ranking amplification conditions in the coarse amplification section 2 is sent in the propagation mode corresponding to the third ranking condition, the third one is sent in the fourth one, etc.). This permutation ensures a better compensation of the differential losses of the modes along the transmission line since each signal will propagate in all possible conditions span after span.

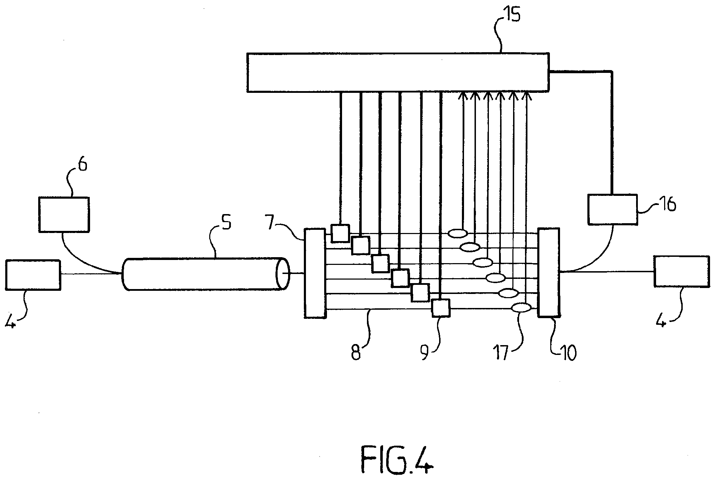

Figure 4 is a functional representation of a third embodiment of an optical amplification device having a coarse amplification section and a fine amplification section.

In this embodiment, the fine amplification components 9 are dynamic components. A feedback system controls the fine amplification components 9 to adjust the amplification of each propagation mode in the fine amplification section 3.

The amplification device 1 according to this embodiment includes a controller 15. Each fine amplification component 9 is connected to and controlled by the controller 15. A global power monitor 16 is connected to the output of the Mode-MUX 10. The global power monitor 16 measures the total output power of the fine amplification section 3. Each waveguide 8 includes a local power monitor 17. Each local power monitor 17 measures the output power of the fine amplification component 9 in the corresponding waveguide 8. Both the local power monitors 17 and the global power monitor 16 are connected to the controller 15. The controller 15 receives measurements of the global output power and the measurement of the local output power of each fine amplification component 9. These power monitors 16, 17 are used to provide a feedback to the controller 15 for adjusting the fine amplification components 9 for equalizing.

A first calibration, in manufacturing site for example, of the monitors with an external powermeter can be used in order to measure the conversion losses of the Modes-DMUX 7 and Modes-MUX 10. The measured values are used for managing a correct equalization of the system using as a reference the real power injected in the multi-mode optical fiber 4.

The controller 15 uses the measured power output of the power monitors 16, 17 and measured conversion losses to calculate the amplification requirement for each fine amplification component 9. Then, the controller 15 dynamically commands each fine amplification component 9 according to the calculated amplification requirement. For instance, the gain of a fine amplification component may be obtained with the equation:

$$P_{set(i)} = \Sigma \left\{ P_{out/n} - (P_{out(i)}) - \varepsilon_{(i)} \right\}$$

Where index "i" denotes the individual fine amplification component 9, index "n" denotes the total number of fine amplification components 9, Pset(i) is the amplification requirement calculated, Pout is the measured global power output, Pout/n is the average power output of the fine amplification components 9, Pout(i) is the measured output power of the fine amplification component "i", $\varepsilon(i)$ denotes the conversion losses of the Mode-MUX for the "i" mode propagation.

This dynamic fine amplification control method ensures a constant quality of equalization over time, as the amplification device ensures an amplification adapted to the real output power of each waveguide 8.

Elements such as the control units could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

Whenever the output power of the first stage is sufficiently large and the losses of the Modes-DMUX/Modes-MUX are sufficiently low, then the fine amplification section can be replaced by a passive gain equalizer based on Variable Optical attenuator (VOA).

In another embodiment, the fine amplification section may include an active component and a passive component. The active component may be for instance a SOA which operates at a fixed bias while the passive component may be for instance a VOA dynamically adjusted for equalization.

If the coarse amplification sections amplify strongly all the signals, a plurality of parallelized VOA could be used to equalize the gain over the different modes.

All the description above is made with a mode multiplexing optical networks. However, the skilled reader will appreciate that this description is valid for any spatial division multiplexing, as for instance a multi-core fiber carrying a plurality of spatially multiplexed signals in a plurality of cores.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical amplification device for a Spatial Division Multiplexing optical fiber, comprising:

   - an input section connectable to a first optical fiber (4) for receiving a plurality of spatially multiplexed optical signals from the first optical fiber,
   - a coarse amplification section (2) connected to the input section, the coarse amplification section comprising an Erbium doped optical waveguide arranged for amplifying all optical signals of the plurality of spatially multiplexed optical signals received in the input section,

   **characterized in that** it comprises

   - a spatial demultiplexing section (7) connected to an output of the coarse amplification section for receiving the plurality of spatially multiplexed optical signals amplified, said spatial demultiplexing section being arranged for separating the plurality of spatially multiplexed optical signals as a function of a spatial property of each optical signal,
   - a spatial multiplexing section (10) having a plurality of inputs and an output, the output of the spatial multiplexing section being connectable to a second optical fiber for transmitting a plurality of spatially multiplexed optical signals in the second optical fiber, said spatial multiplexing section being adapted for spatially multiplexing into the second optical fiber a plurality of optical signals received at the inputs of the spatial multiplexing section,
   - a plurality of optical fine adjustment paths (8) each arranged between an output of the spatial demultiplexing section and an input of the spatial multiplexing section and adapted to send a respective optical signal from the output of the spatial demultiplexing section to the input of the spatial multiplexing section, wherein each optical fine adjustment path comprises an independent optical power adjustment component (9) adapted to adjust power of the optical signal carried on the corresponding optical fine adjustment path.

2. The optical amplification device according to claim 1, wherein the first and second optical fibers are multi-mode optical fibers, each signal of the plurality of spatially multiplexed optical signals being carried on a respective propagation mode of the first optical fiber, the Erbium doped optical waveguide being a multi-mode waveguide, the spatial demultiplexing section being a mode demultiplexer arranged for separating the plurality of mode-multiplexed optical signals as a function of the propagation modes of the optical signals in the first optical fiber mode of the optical signals and the multiplexing section being a mode multiplexer adapted for mode multiplexing into the second optical fiber the optical signals received at the inputs of the mode multiplexer.

3. The optical amplification device according to claim 2, wherein each output of the spatial demultiplexing section is associated to a respective mode of the first optical fiber, each input of the spatial multiplexing section is associated to a respective mode of the second optical fiber, and wherein the plurality of fine adjustment paths are all arranged to connect an output of the demultiplexing section to a shifted input of the multiplexing section so that each optical signal of the plurality of optical signals is carried in the second optical fiber on a propagation mode having different spatial properties from the first optical fiber.

4. The optical amplification device according to claim 1, wherein the first optical fiber and the second optical fiber are multi-core optical fibers, each optical signal of the plurality of spatially multiplexed optical signals being carried on a respective core of the first multi-core optical fiber, the Erbium doped optical waveguide being a multi-core waveguide, the spatial demultiplexing section being a core demultiplexer arranged for separating the plurality of spatially multiplexed optical signals as a function of the core of the Erbium doped optical waveguide on which each signal is carried, and the multiplexing section being a spatial multiplexer adapted for sending all the optical signals received at the inputs of the mode multiplexer into respective cores of the second multi-core optical fiber.

5. The optical amplification device according to claim 4, wherein each output of the spatial demultiplexing section is associated to a respective core of the first optical fiber, each input of the spatial multiplexing section is associated to a respective core of the second optical fiber, and wherein the plurality of fine adjustment paths are all arranged to connect an output of the demultiplexing section to a shifted input of the multiplexing section so that each optical signal of the plurality of signals is carried in the second optical fiber on a core having different spatial properties from the associated core in the first optical fiber.

6. The optical amplification device according to any one of claims 1 to 5, wherein an optical signal of the plurality of spatially multiplexed optical signals is a WDM optical signal.

7. The optical amplification device according to anyone of claims 1 to 6, wherein the coarse amplification section further comprises:

- a first optical isolator connected to the input section for passing the plurality of spatially multiplexed optical signals to the Erbium doped optical waveguide,
- a pump laser,
- a dichroic mirror connected to the first isolator and to the pump laser, said dichroic mirror being adapted to couple a pump signal generated by the pump laser with the spatially multiplexed optical signal from the first isolator,
- the erbium doped waveguide connected to the dichroic mirror to receive the coupled signals, and
- a second isolator connected to the erbium doped waveguide for passing the spatially multiplexed signals to the spatial demultiplexing section.

8. The optical amplification device according to anyone of claims 1 to 7, wherein the power adjusting component comprises an optical amplifier selected in the group consisting of a semi-conductor optical amplifier, an Erbium-doped fiber trunk and an Erbium doped silicon photonics waveguide.

9. The optical amplification device according to anyone of claims 1 to 8, wherein the power adjustment component comprises a Variable Optical attenuator.

10. The optical amplification device according to claim 8 taken in combination with claim 9, wherein the optical amplifier operates at a fixed bias and the Variable optical attenuator is controlled dynamically.

11. The optical amplification device according to anyone of claims 1 to 10, wherein the optical amplification device further comprises:

- a controller,
- a global power monitor connected to the output of the spatial multiplexing section for measuring a total output power of the optical amplification device, the global monitor being connected to the controller to send measured total output power to the controller,

and wherein each optical adjustment path further comprises a local power monitor for measuring the power of the optical signal on the corresponding optical adjustment path, each local power monitor being connected to the controller, the controller being adapted to configure each optical adjustment component as a function of the total output power measurement and the local power measurement of the corresponding optical adjustment path.

12. Method for operating an optical amplification device according to claim 11, comprising :

- receiving a plurality of spatially multiplexed optical signals in the input section,
- amplifying all the signals of the plurality of spatially multiplexed optical signals in the coarse amplification section,
- spatially demultiplexing the spatially multiplexed optical signals in the spatial demultiplexing section and sending each optical signal on a corresponding optical fine adjustment path,
- spatially multiplexing the signals carried by the plurality of optical fine adjustment paths in the spatial multiplexing section and sending the plurality of spatially multiplexed optical signals on an optical fiber,

the method further comprising :

- measuring a total output power at the output of the spatial multiplexing section,
- calculating an average optical power of the optical adjustment paths
- measuring a local output power of an optical adjustment path comprising a power adjustment component,
- tuning the power adjustment component as a function of the difference between the average optical power emission of the optical adjustment paths and the measured local output power of the optical adjustment path.


**Patentansprüche**

1. Optische Verstärkervorrichtung für eine Raummultiplex-Glasfaser, umfassend:

   - einen Eingangsabschnitt, verbindbar mit einer ersten Glasfaser (4) zum Empfang einer Vielzahl raummultiplexter optischer Signale von der ersten Glasfaser,
   - einen mit dem Eingangsabschnitt verbundenen Grobverstärkungsabschnitt (2), wobei der Grobverstärkungsabschnitt einen erbiumdotierten optischen Wellenleiter umfasst, der angeordnet ist für das Verstärken aller optischen Signale aus der Vielzahl der raummultiplexten optischen Signale, die im Eingangsabschnitt empfangen werden,

   **dadurch gekennzeichnet, dass** sie umfasst:

   - einen mit dem Ausgang des Grobverstärkungsabschnitts verbundenen Raumdemultiplexabschnitt (7) für den Empfang der Vielzahl raummultiplexter optischer Signale in verstärktem Zustand, wobei besagter Raumdemultiplexabschnitt angeordnet ist für das Trennen der Vielzahl raummultiplexter optischer Signale in Funktion der Raumeigenschaften eines jeden optischen Signals,
   - einen Raummultiplexabschnitt (10) mit einer Vielzahl von Eingängen und einem Ausgang, wobei der Ausgang des Raummultiplexabschnitts verbindbar ist mit einer zweiten Glasfaser für das Übermitteln einer Vielzahl raummultiplexter optischer Signale in die zweite Glasfaser, wobei besagter Raummultiplexabschnitt ausgelegt ist für das Raummultiplexen einer Vielzahl optischer Signale, die an den Eingängen des Raummultiplexabschnitts empfangen wurden, in die zweite Glasfaser,
   - eine Vielzahl optischer Feinabstimmungspfade (8), jeder von ihnen angeordnet zwischen einem Ausgang des Raumdemultiplexabschnitts und einem Eingang des Raummultiplexabschnitts und ausgelegt für das Senden eines entsprechenden optischen Signals von dem Ausgang des Raumdemultiplexabschnitts an den Eingang des Raummultiplexabschnitts, wobei jeder optische Feinabstimmungspfad eine eigenständige Anpassungskomponente für die optische Leistung (9) umfasst, die ausgelegt ist für das Anpassen der Stärke des optischen Signals, das auf dem entsprechenden optischen Feinabstimmungspfad getragen wird.

2. Die optische Verstärkervorrichtung nach Anspruch 1, wobei die erste und die zweite Glasfaser Multimode-Glasfasern sind, wobei jedes Signal aus der Vielzahl raummultiplexter optischer Signale von einem entsprechenden Ausbreitungsmodus der ersten Glasfaser getragen wird, wobei der erbiumdotierte Wellenleiter ein Multimode-Wellenleiter ist, und wobei der Raumdemultiplexabschnitt ein Modusdemultiplexer ist, der angeordnet ist für das Trennen der Vielzahl modusmultiplexter optischer Signale in Funktion der Ausbreitungsmodi des optischen Signals im ersten Glasfasermodus des optischen Signals, und wobei der Multiplexabschnitt ein Modusmultiplexer ist, der ausgelegt ist für das Modusmultiplexen der an den Eingängen des Modusmultiplexers empfangenen, optischen Signale in die zweite Glasfaser.

3. Die optische Verstärkervorrichtung nach Anspruch 2, wobei jeder Ausgang des Raumdemultiplexabschnitts assoziiert ist mit einem entsprechenden Modus der ersten Glasfaser, wobei jeder Eingang des Raummultiplexabschnitts assoziiert ist mit einem entsprechenden Modus der zweiten Glasfaser, und wobei die Vielzahl von Feinabstimmungspfaden durchgehend angeordnet sind für das Verbinden eines Ausgangs des Demultiplexabschnitts mit einem verschobenen Eingang des Multiplexabschnitts, dergestalt, dass jedes optische Signal aus der Vielzahl optischer Signale in der zweiten Glasfaser in einem Ausbreitungsmodus mit anderen räumlichen Eigenschaften als die der ersten Glasfaser getragen wird.

4.  Die optische Verstärkervorrichtung nach Anspruch 1, wobei die erste Glasfaser und die zweite Glasfaser Multikern-Glasfasern sind, wobei jedes optische Signal aus der Vielzahl raummultiplexter optischer Signale von einem entsprechenden Kern der ersten Multikern-Glasfaser getragen wird, wobei der erbiumdotierte Wellenleiter ein Multikern-Wellenleiter ist, und wobei der Raumdemultiplexabschnitt ein Kerndemultiplexer ist, der angeordnet ist für das Trennen der Vielzahl raummultiplexter optischer Signale in Funktion des Kerns des erbiumdotierten optischen Wellenleiters ist, auf dem jedes der Signale getragen wird, und wobei der Multiplexabschnitt ein Raummultiplexer ist, der ausgelegt ist für das Senden aller der an den Eingängen des Modusmultiplexers empfangenen, optischen Signale in die jeweiligen Kerne der zweiten Multikern-Glasfaser.

5.  Die optische Verstärkervorrichtung nach Anspruch 4, wobei jeder Ausgang des Raumdemultiplexabschnitts assoziiert ist mit einem entsprechenden Kern der ersten Glasfaser, wobei jeder Eingang des Raummultiplexabschnitts assoziiert ist mit einem entsprechenden Kern der zweiten Glasfaser, und wobei die Vielzahl von Feinabstimmungspfaden durchgehend angeordnet sind für das Verbinden eines Ausgangs des Demultiplexabschnitts mit einem verschobenen Eingang des Multiplexabschnitts, dergestalt, dass jedes optische Signal aus der Vielzahl optischer Signale in der zweiten Glasfaser in einem Kern mit anderen räumlichen Eigenschaften als dem Kern getragen wird, der mit der ersten Glasfaser assoziiert ist.

6.  Die optische Verstärkervorrichtung nach einem jeglichen der Ansprüche 1 bis 5, wobei ein optisches Signal aus der Vielzahl raummultiplexter optischer Signale ein optisches WDM-Signal ist.

7.  Die optische Verstärkervorrichtung nach einem jeglichen der Ansprüche 1 bis 6, wobei der Grobverstärkungsabschnitt weiterhin umfasst:

    - einen ersten optischen Isolator, verbunden mit dem Eingangsabschnitt zum Weiterleiten der Vielzahl raummultiplexter optischer Signale an den erbiumdotierten optischen Wellenleiter,
    - einen Pumplaser,
    - einen dichroitischen Spiegel, der an den ersten Isolator und den Pumplaser angeschlossen ist, wobei besagter dichroitischer Spiegel dafür ausgelegt ist, um ein von dem Pumplaser generiertes Pumpsignal mit dem raummultiplexten optischen Signal von dem ersten Isolator zu koppeln,
    - den erbiumdotierten Wellenleiter, gekoppelt an den dichroitischen Spiegel, für den Empfang gekoppelter Signale, und
    - einen zweiten, mit dem erbiumdotierten Wellenleiter verbundenen Isolator für das Weiterleiten der raummultiplexten Signale an den Raumdemultiplexabschnitt.

8.  Die optische Verstärkervorrichtung nach einem jeglichen der Ansprüche 1 bis 7, wobei die Leistungsanpassungskomponente einen optischen Verstärker umfasst, ausgewählt aus der Gruppe, die aus einem optischen Halbleiterverstärker, einem erbiumdotierten Glasfaserstrang und einem erbiumdotierten Siliziumphotonik-Wellenleiter besteht.

9.  Die optische Verstärkervorrichtung nach einem jeglichen der Ansprüche 1 bis 8, wobei die Leistungsanpassungskomponente einen variablen optischen Dämpfer umfasst.

10. Die optische Verstärkervorrichtung nach Anspruch 8 in Kombination mit Anspruch 9, wobei der optische Verstärker mit einer festen Vorspannung betrieben und der variable optische Dämpfer dynamisch gesteuert wird.

11. Die optische Verstärkervorrichtung nach einem jeglichen der Ansprüche 1 bis 10, wobei der die optische Verstärkervorrichtung weiterhin umfasst:

    - eine Steuerung,
    - einen mit dem Ausgang des Raummultiplexabschnitts verbundenen, allgemeinen Leistungsmonitor zum Messen einer Gesamtausgabeleistung der optischen Verstärkervorrichtung, wobei der allgemeine Monitor an die Steuerung angeschlossen ist, um die gemessene Gesamtausgabeleistung an die Steuerung zu senden,

    und wobei jeder optische Abstimmungspfad weiterhin einen lokalen Leistungsmonitor für das Messen der Leistung des optischen Signals auf dem entsprechenden optischen Abstimmungspfad umfasst, wobei jeder lokale Leistungsmonitor mit der Steuerung verbunden ist, wobei die Steuerung ausgelegt ist für das Konfigurieren einer jeden optischen Abstimmungskomponente in Funktion der Gesamtausgabeleistungsmessung und der lokalen Leistungsmessung des entsprechenden optischen Abstimmungspfads.

12. Verfahren für den Betrieb einer optischen Verstärkervorrichtung nach Anspruch 11, umfassend:

    - den Empfang einer Vielzahl raummultiplexter optischer Signale,

- das Verstärken aller Signale aus der Vielzahl raummultiplexter optischer Signale in dem Grobverstärkungsabschnitt,
- das Raumdemultiplexen der raummultiplexten optischen Signale in dem Raumdemultiplexabschnitt und das Senden eines jeden optischen Signals auf einem entsprechenden optischen Feinabstimmungspfad,
- das Raummultiplexen der Signale, die von der Vielzahl optischer Feinabstimmungspfade in dem Raummultiplexabschnitt getragen werden, und das Senden der Vielzahl raummultiplexter optischer Signale über eine Glasfaser,

wobei das Verfahren weiterhin umfasst:

- das Messen einer Gesamtausgabeleistung am Ausgang des Raummultiplexabschnitts,
- das Berechnen einer durchschnittlichen optischen Leistung der optischen Abstimmungspfade,
- das Messen einer lokalen Ausgabeleistung eines optischen Abstimmungspfads, welcher eine Leistungsabstimmungskomponente umfasst,
- das Einstellen der Leistungsabstimmungskomponente in Funktion der Differenz zwischen der durchschnittlichen optischen Leistungsausgabe über die optischen Abstimmungspfade und der gemessenen lokalen Ausgabeleistung des optischen Abstimmungspfads.

## Revendications

1. Dispositif d'amplification optique destiné à une fibre optique à multiplexage spatial, comprenant :

    - une partie entrée pouvant être connectée à une première fibre optique (4) pour recevoir une pluralité de signaux optiques multiplexés spatialement en provenance de la première fibre optique,
    - une partie amplification grossière (2) connectée à la partie entrée, la partie amplification grossière comprenant un guide d'onde optique dopé à l'erbium conçu pour amplifier tous les signaux optiques de la pluralité de signaux optiques multiplexés spatialement reçus dans la partie entrée,

    **caractérisé en ce qu'**il comprend

    - une partie démultiplexage spatial (7) connectée à une sortie de la partie amplification grossière pour recevoir la pluralité de signaux optiques multiplexés spatialement amplifiés, ladite partie démultiplexage spatial étant conçue pour séparer la pluralité de signaux optiques multiplexés spatialement en fonction d'une propriété spatiale de chaque signal optique,
    - une partie multiplexage spatial (10) ayant une pluralité d'entrées et une sortie, la sortie de la partie multiplexage spatial pouvant être connectée à une deuxième fibre optique pour transmettre une pluralité de signaux optiques multiplexés spatialement dans la deuxième fibre optique, ladite partie multiplexage spatial étant adaptée pour multiplexer spatialement dans la deuxième fibre optique une pluralité de signaux optiques reçus sur les entrées de la partie multiplexage spatial,
    - une pluralité de chemins optiques à réglage fin (8) disposés chacun entre une sortie de la partie démultiplexage spatial et une entrée de la partie multiplexage spatial et adaptés pour envoyer un signal optique correspondant de la sortie de la partie démultiplexage spatial vers l'entrée de la partie multiplexage spatial, dans lesquels chaque chemin optique à réglage fin comprend un composant indépendant de réglage de la puissance optique (9) adapté pour régler la puissance du signal optique acheminé sur le chemin optique à réglage fin correspondant.

2. Dispositif d'amplification optique selon la revendication 1, dans lequel la première et la deuxième fibres optiques sont des fibres optiques multimodes, chaque signal de la pluralité de signaux optiques multiplexés spatialement étant acheminé selon un mode de propagation correspondant de la première fibre optique, le guide d'onde optique dopé à l'erbium étant un guide d'onde multimode, la partie démultiplexage spatial étant un démultiplexeur de mode conçu pour séparer la pluralité de signaux optiques multiplexés selon le mode en fonction des modes de propagation des signaux optiques dans le mode des signaux optiques de la première fibre optique et la partie multiplexage spatial étant un multiplexeur de mode adapté pour multiplexer selon le mode dans la deuxième fibre optique les signaux optiques reçus sur les entrées du multiplexeur de mode.

3. Dispositif d'amplification optique selon la revendication 2, dans lequel chaque sortie de la partie démultiplexage spatial est associée à un mode correspondant de la première fibre optique, chaque entrée de la partie multiplexage spatial est associée à un mode correspondant de la deuxième fibre optique, et dans lequel la pluralité de chemins à réglage fin sont tous disposés pour connecter une sortie de la partie démultiplexage à une entrée décalée de la partie multiplexage de sorte que chaque signal optique de la pluralité de signaux optiques soit acheminé dans la deuxième fibre optique dans un mode de propagation ayant des propriétés spatiales différentes par rapport à la première fibre optique.

**4.** Dispositif d'amplification optique selon la revendication 1, dans lequel la première fibre optique et la deuxième fibre optique sont des fibres optiques multicoeurs, chaque signal optique de la pluralité de signaux optiques multiplexés spatialement étant acheminé dans un coeur correspondant de la première fibre optique multicoeur, le guide d'onde optique dopé à l'erbium étant un guide d'onde multicoeur, la partie démultiplexage spatial étant un démultiplexeur de coeur conçu pour séparer la pluralité de signaux optiques multiplexés spatialement en fonction du coeur du guide d'onde optique dopé à l'erbium sur lequel chaque signal est acheminé, et la partie multiplexage étant un multiplexeur spatial adapté pour envoyer tous les signaux optiques reçus sur les entrées du multiplexeur de mode dans des coeurs correspondants de la deuxième fibre optique mutticoeur.

**5.** Dispositif d'amplification optique selon la revendication 4, dans lequel chaque sortie de la partie démultiplexage spatial est associée à un coeur correspondant de la première fibre optique, chaque entrée de la partie multiplexage spatial est associée à un coeur correspondant de la deuxième fibre optique, et dans lequel la pluralité de chemins à réglage fin sont tous disposés pour connecter une sortie de la partie démultiplexage à une entrée décalée de la partie multiplexage de sorte que chaque signal optique de la pluralité de signaux soit acheminé dans la deuxième fibre optique dans un coeur ayant des propriétés spatiales différentes de celles du coeur associé de la première fibre optique.

**6.** Dispositif d'amplification optique selon l'une quelconque des revendications 1 à 5, dans lequel un signal optique de la pluralité de signaux optiques multiplexés spatialement est un signal optique WDM.

**7.** Dispositif d'amplification optique selon l'une quelconque des revendications 1 à 6, dans lequel la partie amplification grossière comprend en outre :

- un premier isolateur optique connecté à la partie entrée pour transmettre la pluralité de signaux optiques multiplexés spatialement au guide d'onde optique dopé à l'erbium,
- un laser à pompe,
- un miroir dichroïque connecté au premier isolateur et au laser à pompe, ledit miroir dichroïque étant adapté pour coupler un signal de pompage généré par le laser à pompe au signal optique multiplexé spatialement provenant du premier isolateur,
- le guide d'onde dopé à l'erbium connecté au miroir dichroïque pour recevoir les signaux couplés, et

- un deuxième isolateur connecté au guide d'onde dopé à l'erbium pour transmettre les signaux multiplexés spatialement à la partie démultiplexage spatial.

**8.** Dispositif d'amplification optique selon l'une quelconque des revendications 1 à 7, dans lequel le composant de réglage de puissance comprend un amplificateur optique sélectionné dans le groupe composé d'un amplificateur optique à semi-conducteur, d'un tronçon de fibre dopée à l'erbium et d'un guide d'onde photonique en silicium dopé à l'erbium.

**9.** Dispositif d'amplification optique selon l'une quelconque des revendications 1 à 8, dans lequel le composant de réglage de puissance comprend un affaiblisseur optique variable.

**10.** Dispositif d'amplification optique selon la revendication 8 considérée en association avec la revendication 9, dans lequel l'amplificateur optique fonctionne avec une polarisation fixe et l'affaiblisseur optique variable est commandé dynamiquement.

**11.** Dispositif d'amplification optique selon l'une quelconque des revendications 1 à 10, dans lequel le dispositif d'amplification optique comprend en outre :

- une unité de commande,
- un contrôleur de puissance global connecté à la sortie de la partie multiplexage spatial pour mesurer une puissance de sortie totale du dispositif d'amplification optique, le contrôleur global étant connecté à l'unité de commande pour lui envoyer la puissance de sortie totale mesurée,

et dans lequel chaque chemin optique réglable comprend en outre un contrôleur de puissance local pour mesurer la puissance du signal optique sur le chemin optique réglable correspondant, chaque contrôleur de puissance local étant connecté à l'unité de commande, l'unité de commande étant adaptée pour configurer chaque composant de réglage optique en fonction de la mesure de la puissance de sortie totale et de la mesure de la puissance locale du chemin optique réglable correspondant.

**12.** Procédé destiné à faire fonctionner un dispositif d'amplification optique selon la revendication 11, comprenant les étapes suivantes :

- recevoir une pluralité de signaux optiques multiplexés spatialement dans la partie entrée,
- amplifier tous les signaux de la pluralité de signaux optiques multiplexés spatialement dans la partie amplification grossière,

- démultiplexer spatialement les signaux optiques multiplexés spatialement dans la partie démultiplexage spatial et envoyer chaque signal optique sur un chemin optique à réglage fin correspondant,
- multiplexer spatialement les signaux acheminés par la pluralité de chemins optiques à réglage fin dans la partie multiplexage spatial et envoyer la pluralité de signaux optiques multiplexés spatialement sur une fibre optique,

le procédé comprenant en outre les étapes suivantes :

- mesurer une puissance de sortie totale en sortie de la partie multiplexage spatial,
- calculer une puissance optique moyenne pour les chemins optiques réglables,
- mesurer une puissance de sortie locale d'un chemin optique réglable comprenant un composant de réglage de puissance,
- régler le composant de réglage de la puissance en fonction de la différence entre l'émission de puissance optique moyenne des chemins optiques réglables et la puissance de sortie locale mesurée du chemin optique réglable.

FIG.1

FIG.2

FIG.3

EP 2 903 185 B1

FIG.4

**EP 2 903 185 B1**

## REFERENCES CITED IN THE DESCRIPTION

### Patent documents cited in the description

- US 2012207470 A